# EUROPÄISCHE PATENTSCHRIFT

(11) **EP 1 129 884 B1**
(45) Veröffentlichungstag und Bekanntmachung des Hinweises auf die Patenterteilung: **02.03.2005**
(21) Anmeldenummer: 01105094.5
(22) Anmeldetag: 02.03.2001
(51) Int. Cl.: B60K 26/02, F02D 11/02, G05G 1/14

(54) **Kick-down-Element für ein Fahrpedalmodul eines Kraftfahrzeugs**
Kickdown element for motor vehicle accelerator pedal
Kickdown pour pédale d'accélérateur d'un véhicule automobile

(30) Priorität: 03.03.2000 DE 10010432
(43) Veröffentlichungstag der Anmeldung: 05.09.2001
(73) Patentinhaber: ROBERT BOSCH GMBH, 70442 Stuttgart (DE)
(72) Erfinder: Velte, Uwe, 77833 Ottersweiser (DE); Maennle, Erik, 77704 Oberkirch (DE)

(56) Entgegenhaltungen:
- DE-A- 19 536 699
- DE-A- 19 918 119
- DE-C- 19 521 821

## Beschreibung

### Stand der Technik

Die Erfindung geht aus von einem Kick-down-Element für ein Fahrpedalmodul eines Fahrzeugs nach dem Oberbegriff des Anspruchs 1.

Bei Fahrzeugen mit automatischem Schaltgetriebe ist im Fahrpedalmodul ein sog. Kick-down-Element vorhanden, das in einer vorbestimmten Stellung des Fahrpedals die Kraft, mit der das Fahrpedal betätigt werden muß, sprunghaft ansteigen läßt.

Bei einem bekannten Fahrpedalmodul (DE 195 21 821 C1) ist das Fahrpedal, das einen mit dem Fuß zu betätigenden Pedalhebel und eine auf diesem endseitig befestigte Fußplatte umfaßt, auf einer gehäusefesten Betätigungswelle gelagert. Mit der Betätigungswelle ist ein Hebel drehfest verbunden, der mit einem beim Schwenken des Pedalhebels eine Reibkraft erzeugenden Bremsglied zusammenwirkt, so daß der Fahrer beim Betätigen des Fahrpedals eine gewisse Betätigungskraft aufbringen muß. Das nach einem vorbestimmten Schwenkweg des Fahrpedals wirksam werdende Kick-down-Element umfaßt eine an dem Hebel angeformte Nase sowie eine gehäuseseitige, U-förmige Blattfeder und ein Verbindungselement, welches zwei Rollen, die mit ihrer Mantelfläche an der Innenseite der Blattfeder anliegen, so aufnimmt, daß die Rollen zum einen drehbar und zum anderen in Richtung auf die Schenkel der Blattfeder hin verschieblich gelagert sind. Das Verbindungselement ist in einem schwalbenschwanzartigen Einschub auf der Innenseite des Modulgehäuses eingeschoben. Bei Überschreiten eines vorbestimmten Schwenkweges des Fahrpedals taucht die keilförmige Nase zwischen die Rollen ein und drückt diese nach außen, wodurch die Schenkel der Blattfeder gespreizt werden. Damit wird in diesem Bereich des Verstellwegs des Fahrpedals ein erhöhter Kraftaufwand für die Betätigung des Fahrpedals benötigt. Die Kraft-Wege-Charakteristik hängt dabei neben der Eigenschaften der Blattfeder auch von der Formgebung der Nase ab und kann durch Verändern der Nasenform leicht beeinflußt werden.

Bei einem ebenfalls bekannten Fahrpedalmodul (DE 195 36 699 A1) ist das Kick-down-Element als komplette Baueinheit wahlweise in das Fahrpedalmodul einsetzbar. Hierzu ist eine hier nicht beschriebene Kick-down-Mechanik in einem Gehäuse integriert, das in einer Haltestruktur des Fahrpedalmoduls lösbar eingesteckt ist. Aus dem Gehäuse steht ein Betätigungsstift vor, an dem sich nach einem vorgegebenen Schwenkweg ein am Fahrpedal angeordneter Anschlag anlegt und der bei Weiterbetätigung des Fahrpedals in das Gehäuse hineingedrückt wird, wobei die erforderliche Pedalkraft zur Betätigung des Fahrpedals sprunghaft ansteigt.

Bei einem als eine solche Komplett-Baueinheit ausgebildeten Kick-down-Element der eingangs genannten Art (nicht vorveröffentlichte Anmeldung DE 199 18 119.5) ist es bereits vorgeschlagen worden, ein Betätigungsglied in einem topfförmigen Gehäuse axial verschieblich zu führen und zur Erzeugung der Rückstellkraft das Betätigungsglied über eine Druckfeder am Topfboden des Gehäuses abzustützen. Das Betätigungsglied nimmt zwei diametral angeordnete, als Kugeln ausgebildete Wälzkörper auf, die in einer Querbohrung im Betätigungsglied geführt sind und mittels einer in der Querbohrung einliegenden Spreizfeder, die eine schraubenförmig gewundene Druckfeder oder eine U-förmig gebogene Blattfeder sein kann, gegen die Innenwand des topfförmigen Gehäuses gedrückt werden. Unmittelbar unterhalb der Kugeln ist ein klammerartig geformtes Halteelement mit zwei an der Innenwand des Gehäuses anliegenden Schenkeln eingeschoben. Die Schenkel sind wellenförmig gestaltet, so daß eine gewisse radiale Federwirkung erzielt wird und sichergestellt ist, daß die Schenkel sich in Achsrichtung einerseits an einer gehäuseseitigen Haltefläche und andererseits an einer betätigungsgliedseitigen Haltefläche abstützen. An den Schenkeln des Halteelements gibt es jeweils eine Kante, die im Verschiebeweg der Kugeln eine Stufe bildet, die bei einer gegen die Rückstellkraft der Druckfeder erfolgenden Verschiebung des Betätigungselements in das Gehäuse hinein von den federbelasteten Kugeln überwunden werden muß. Dadurch muß bei der Verschiebung des Betätigungsglieds zusätzlich zu der Rückstellkraft der Druckfeder eine Zusatzkraft aufgebracht werden, die relativ hoch ist, aber nur über eine kurze Wegstrecke während der Betätigung des Betätigungsglieds auftritt. Dies führt dazu, daß der das Fahrpedal drückende Fahrer einen erwünschten, deutlich spürbaren Druckpunkt merken kann. Sobald die Kugeln über die Stufen hinweggedrückt sind, gleiten sie entlang der Schenkel des Halteelements, so daß nach Überwinden der Stufen nur noch die deutlich niedrigeren Kräfte der Druckfeder und der Reibung zwischen den Kugeln und den Schenkeln des Halteelements wirksam sind.

### Vorteile der Erfindung

Das erfindungsgemäße Kick-down-Element hat den Vorteil, daß es eine komplette, vormontierbare, sehr kompakte und kostengünstige Baueinheit ist, die - wie bekannte Kick-down-Elemente - bei der weiteren Montage des Fahrpedalmoduls in eine entsprechende Halteöffnungen eingesetzt werden kann. Dadurch, daß die Enden der Federschenkel der Blattfeder als gehäuseseitige, die Betätigungskraft sprunghaft erhöhende Überdrückungskanten für die Wälzkörper herangezogen werden, erfüllt die Blattfeder eine weitere Funktion neben ihrer eigentlichen Aufgabe, die radiale Anpreßkraft für die Wälzkörper zu erzeugen. Duch diese doppelte Nutzung der Blattfeder wird die Anzahl der Bauteile des Kick-down-Elements niedrig gehalten und dessen Montage erleichtert. Die nunmehr aus Federstahl bestehenden Überdrückungskanten sind verschleißfest, wodurch sich die Lebensdauer des Kick-down-Elements erhöht. Durch entsprechende Ausführung der vorzugsweise als Druckfeder ausgebildeten Rückstellfeder und der mit der Blattfeder zusammenwirkenden Wälzkörper, die in ihrer Funktion überlagert sind, wird die gewünschte Kennlinie mit der gewünschten Krafterhöhungsspitze für die Kraft-Wege-Charakteristik des Kick-down-Elements erreicht.

Durch die in den weiteren Ansprüchen aufgeführten Maßnahmen sind vorteilhafte Weiterbildungen und Verbesserungen des im Anspruch 1 angegebenen Kick-down-Elements möglich.

Gemäß einer bevorzugten Ausführungsform der Erfindung ist die Festlegung der Blattfeder im Gehäuse mittels der als Druckfeder ausgebildeten Rückstellfeder vorgenommen, die sich zwischen dem am Boden des Gehäuses anliegenden Quersteg der Blattfeder und dem Betätigungsglied abstützt. Durch diese konstruktive Gestaltung wird die Montage des Kick-down-Elements vereinfacht, da durch das Einführen der Druckfeder nach Einlegen der Blattfeder in das Gehäuse die Blattfeder automatisch fixiert wird und Druck- und Blattfeder auf die richtige Vorspannung gebracht werden. Ein bei dem bekannten Kick-down-Element erforderliches, zusätzliches Fügen der Rückstellfeder und Wälzkörper entfällt. Die gespannte Druckfeder wird dadurch unter Vorspannkraft gehalten, daß nach erfolgter Montage das Betätigungsglied von der Druckfeder an einem am Gehäuse angeformten Anschlag angelegt wird.

### Zeichnung

Die Erfindung ist anhand eines in der Zeichnung dargestellten Ausführungsbeispiels in der nachfolgenden Beschreibung näher erläutert. Es zeigen:
- Fig. 1: eine Unteransicht eines Kick-down-Elements in Richtung Pfeil I in Fig. 2,
- Fig. 2: einen Schnitt längs der Linie II-II in Fig. 1 bei unbelastetem Kick-down-Element,
- Fig. 3: einen Schnitt längs der Linie III - III in Fig. 1 des über ein Fahrpedal belasteten Kick-down-Elements,
- Fig. 4: eine Seitenansicht einer Blattfeder im Kick-down-Element gemäß Fig. 1 - 3,
- Fig. 5: eine Draufsicht der Blattfeder in Richtung Pfeil V in Fig. 4,
- Fig. 6: ein Diagramm der Kraft-Weg-Kennlinie des Kick-down-Elements gemäß Fig. 1 - 3.

### Beschreibung des Ausführungsbeispiels

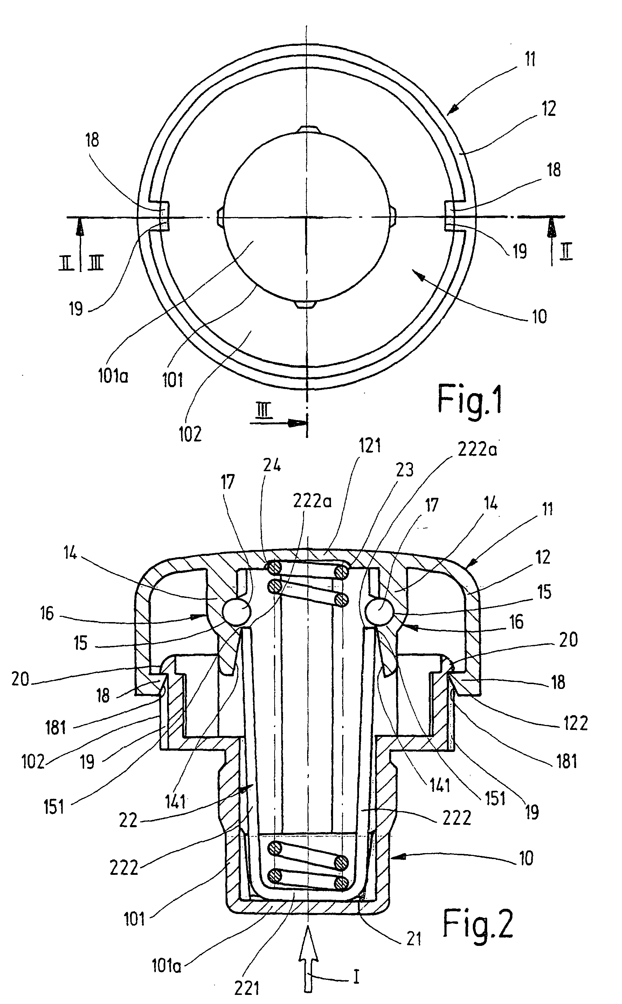

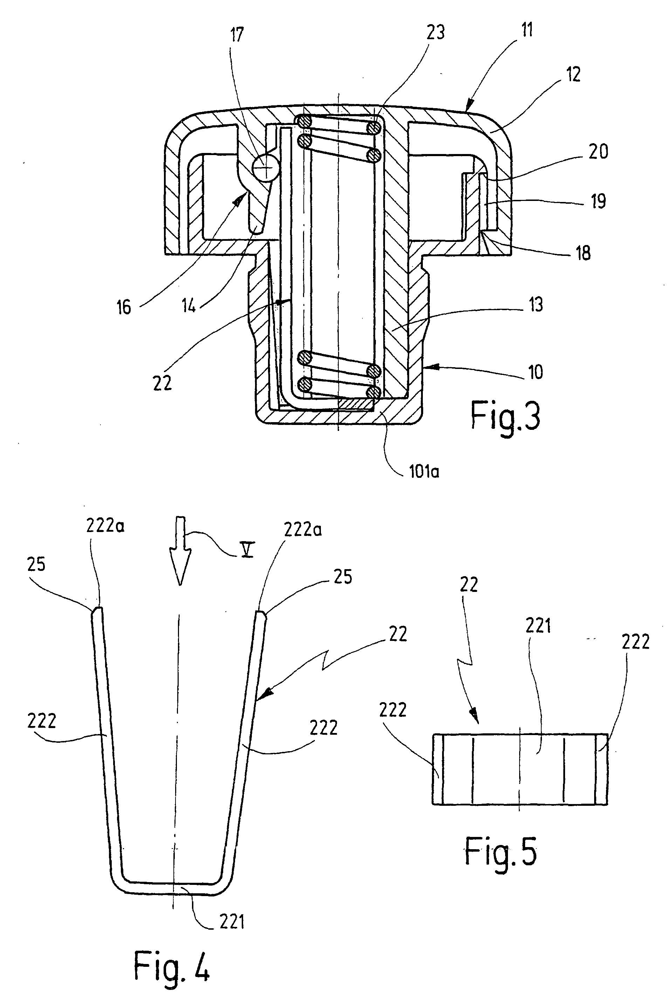

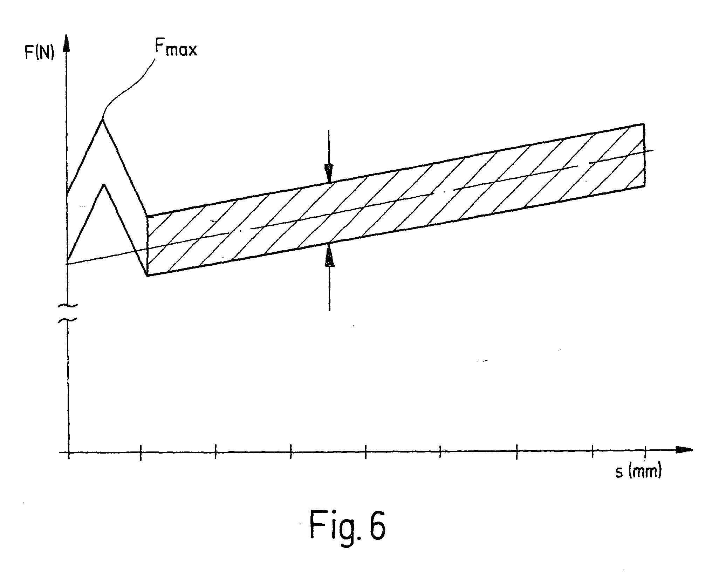

Das in Fig. 1 und 2 dargestellte Kick-down-Element für ein Fahrpedalmodul, wie letzteres beispielsweise in der (DE 195 36 699 A1, dort Fig. 5 oder 6) dargestellt und beschrieben ist, weist ein Gehäuse 10 auf, das in einer hier nicht dargestellten Halterung im Fahrpedalmodul fest aufgenommen ist. Dabei kann die Festlegung des Gehäuses 10 im Fahrpedalmodul so erfolgen, wie dies in der DE 195 36 699 A1 beschrieben ist. Im Gehäuse 10 ist ein Betätigungsglied 11 axial verschieblich geführt, das von einem Anschlagnocken am Fahrpedal des Fahrpedalmoduls beaufschlagt wird, und zwar nachdem das vom Fahrer betätigte Fahrpedal einen vorbestimmten Schwenkweg zurückgelegt hat, wie dies in der DE 195 36 699 A1 beschrieben ist. Das Kick-down-Element ist dabei so ausgebildet, daß zum Verschieben des Betätigungsglieds 11 in das Gehäuse 10 hinein eine sprunghaft erhöhte Kraft erforderlich ist, so daß der Fahrer am Fahrpedal einen deutlichen Druckpunkt spürt.

Im einzelnen weist das als Rotationskörper ausgeführte Gehäuse 10 ein T-förmiges Querschnittprofil mit einem becherförmigen Mittelteil 101 und einem am Becherrand sich einstückig fortsetzenden, schalenförmigen Querteil 102 auf. Das Betätigungsglied 11 ist als Kappe 12 ausgebildet, die den Querteil 102 des Gehäuses 10 übergreift und mittels zweier innen von dem Kappenboden 121 rechtwinklig abstehender, einander diametral gegenüberliegender, kreisbogenabschnittförmiger Führungssegmente 13 (Fig. 3) in dem Mittelteil 101 des Gehäuses 10 axial verschieblich geführt ist. Um 90° gegenüber den Führungssegmenten 13 gedreht stehen in der Kappe 12 innen vom Kappenboden 121 einander diametral gegenüberliegende Stege 14 rechtwinklig ab, in denen jeweils eine Nüt 15 mit Kreisabschnittprofil so eingearbeitet ist, daß die einander diametral gegenüberliegenden Nuten 15 mit ihren Nutöffnungen einander zugekehrt sind. Die Stege 14 mit Nuten 15 bilden Lagerschalen 16 für zwei als Walzen oder Rollen ausgebildete Wälzkörper 17, die formschlüssig in den Nuten 15 aufgenommen und gegen axiales Herausgleiten aus den Nuten 15 gesichert sind. Alternativ können als Walzkörper 17 auch Kugeln verwendet werden. An dem den Querteil 102 des Gehäuses 10 übergreifenden Kappenrand 122 der Kappe 12 sind zwei einander diametral gegenüberliegende, radial nach innen vorspringende Clipshaken 18 angeformt, die in Axialnuten 19 hineinragen, die ihrereits in dem Außenmantel des Querteils 102 des Gehäuses 10 eingearbeitet sind. Die Axialnuten 19 sind nahe dem Schalenrand des Querteils 102 jeweils durch eine im Querteil 102 ausgebildete Radialschulter 20 begrenzt. Die Radialschultern 20 bilden einen Gegenanschlag, der zusammen mit dem von den Clipshaken 18 gebildeten Anschlag ein Abgleiten der Kappe 12 vom Gehäuse 10 verhindert.

Im Boden 101a des Mittelteils 101 ist eine Vertiefung 21 eingearbeitet, in welcher eine U-förmig gebogene Blattfeder 22, die einen Quersteg 221 und zwei davon unter einem stumpfen Winkel abstehende Federschenkel 222 aufweist (Fig. 4 und 5), mit ihrem Quersteg 221 einliegt. An dem Quersteg 221 der Blattfeder 22 sowie am Boden 101a des Mittelteils 101 einerseits und an der Innenfläche des Kappenbodens 121 andererseits stützt sich eine Druckfeder 23 ab, die zwischen den Führungssegmenten 13 aufgenommen ist. Zur Zentrierung der Druckfeder 23 in ihrer Abstützfläche am Kappenboden 121 ist in den Kappenboden 121 ein Vertiefung 24 eingearbeitet. Die vorgespannte Druckfeder 23 drückt die Clipshaken 18 an der Kappe 12 gegen die Radialschultern 20 in den Axialnuten 19 des Querteils 102 des Gehäuses 10 und wird somit auf Vorspannung gehalten. Die Federschenkel 222 der Blattfeder 22 sind so bemessen, daß sie zwischen die Stege 14 hineinragen und an den einander zugekehrten Flächen der Stege 14 unter Vorspannung anliegen. Die Schenkelenden der Federschenkel 222 liegen dabei mit geringem Abstand unterhalb den von dem Kappenboden 101a abgekehrten unteren Nutöffnungskanten 151 der Nuten.

Bei der Montage des Kick-down-Elements wird die Blattfeder 22 zunächst mit ihrem Quersteg 221 in die Vertiefung 21 im Boden 101a des Gehäuses 10 eingesetzt. Danach wird die Kappe 12 mit zwischen den Führungssegementen 13 eingelegter Druckfeder 23 unter Spannen der Druckfeder 23 soweit in das Gehäuse 10 eingeschoben, bis die Clipshaken 18 hinter die Radialschultern 20 in den Axialnuten 19 einrasten. Zur Erleichterung der Montage ist zum einen am Gehäuse 10 die von der ringförmigen Stirnfläche des Querteils 102 bis hin zu den Radialschultern 20 reichende Außenfläche abgerundet und sind die Clipshaken 18 mit einer Auflaufschräge 181 versehen. Zum anderen sind die von der Kappe 12 abstehenden Stege 14 von der unteren Nutöffnungskante 151 bis zu ihrem freien Ende so abgeschrägt, daß sie eine Auflauframpe 141 für die Federschenkel 222 der Blattfedern 22 bilden, so daß mit zunehmendem Überschieben der Stege 14 über die Federschenkel 222 deren Vorspannung erhöht wird. Die Blattfeder 22 wird dabei gleichzeitig von der Druckfeder 23 in der Vertiefung 21 im Boden 101a des Gehäuses 10 fixiert.

Bei montiertem Kick-down-Element bilden die Enden der Federschenkel 222, die mit geringem Abstand unter den beiden Wälzkörpern 17 liegen, eine sog. Überdrückungskante, über die die Wälzkörper 17 bei einem gegen die Vorspannkraft der Druckfeder 23 erfolgenden Verschieben der Kappe 12 hinweggedrückt werden müssen, um auf die Außenflächen der Federschenkel 222 aufzulaufen. Durch diese beiden Überdrückungskanten steigt die zur Verschiebung der Kappe 12 erforderliche Betätigungskraft F bis zu einer Kraftspitze Fₘₐₓ an, wie dies in der Kraft-Weg-Kennlinie des Kick-down-Elements in Fig. 6 dargestellt ist. Nach Überwinden der Überdrückungskante fällt die Betätigungskraft F steil ab und wird nachfolgend über den Verschiebeweg s durch die Federkräfte von Druckfeder 23 und Blattfeder 22 bestimmt. Die Federkennlinie der Druckfeder 23 allein ist in Fig. 6 strichpunktiert eingezeichnet. Die schraffierte Fläche kennzeichnet die Hysterese des Kick-down-Elements.

Für eine einwandfreie Funktion im Zusammenspiel der Überdrückungskanten und der Wälzkörper 17 sind - wie dies in Fig. 4 zu sehen ist - an den Stirnflächen der Federschenkel 222 zu der Außenkante der Federschenkel 222 hin abfallende Rampen 25 ausgebildet. Der Verschiebeweg der Kappe 12 wird durch die Führungssegmente 13 begrenzt, die in maximaler Einschiebestellung des Betätigungsglieds 11 in das Gehäuse 10 am Boden 101a des Gehäuses 10 anschlagen (Fig. 3).

## Patentansprüche

1. Kick-down-Element für ein Fahrpedalmodul eines Fahrzeugs, mit einem Gehäuse (10) und mit einem im Gehäuse (10) geführten, gegen die Kraft einer Rückstellfeder (23) axial verschieblichen Betätigungsglied (11), das zwei diametral angeordnete Wälzkörper (17) trägt, die beim Einschieben des Betätigungsglieds (11) in das Gehäuse (10) zwecks Erhöhung der Verschiebekraft gegen die Kraft einer U-förmig gebogenen Blattfeder (22) über jeweils eine Überdrückungskante hinweggedrückt werden, **dadurch gekennzeichnet, daß** die Wälzkörper (17) in einander diametral gegenüberliegenden Lagerschalen (16) aufgenommen sind, daß die zwei langgestreckte Federschenkel (222) und einen diese verbindenden Quersteg (221) aufweisende Blattfeder (22) mit ihrem Quersteg (221) am Boden (101a) des Gehäuses (10) festgelegt ist und mit ihren Federschenkeln (222) unter Vorspannung so an den Lagerschalen (16) anliegt, daß beim Einschieben des Betätigungsglieds (11) die Wälzkörper (17) sich auf die voneinander abgekehrten Außenseiten der Federschenkel (222) aufschieben, und daß die Überdrückungskanten an den stirnseitigen Schenkelenden (222a) der Federschenkel (222) ausgebildet sind.

2. Kick-down-Element nach Anspruch 1, **dadurch gekennzeichnet, daß** bei ungespannter Blattfeder (22) die einander gegenüberliegenden Federschenkel (222) unter einem stumpfen Winkel vom Quersteg (221) einstückig abstehen und daß die Überdrückungskanten jeweils als eine an den freien Stirnflächen der Federschenkel (222) zu deren Außenkante abfallende Rampe (25) ausgebildet sind.

3. Kick-down-Element nach Anspruch 1 oder 2, **dadurch gekennzeichnet, daß** die Festlegung der Blattfeder (12) im Gehäuse (10) mittels der als Druckfeder (23) ausgebildeten Rückstellfeder vorgenommen ist, die sich zwischen dem am Boden (101a) des Gehäuses (10) anliegenden Quersteg (221) der Blattfeder (22) und dem Betätigungsglied (11) abstützt.

4. Kick-down-Element nach Anspruch 3, **dadurch gekennzeichnet, daß** das Betätigungsglied (11) mit einem Anschlag (18) unter der Vorspannkraft der Druckfeder (23) an einem am Gehäuse (10) angeformten Gegenanschlag (20) anliegt.

5. Kick-down-Element nach Anspruch 4, **dadurch gekennzeichnet, daß** das Gehäuse (10) ein T-förmiges Querschnittsprofil mit einem becherförmigen Mittelteil (101) und einem am Becherrand sich einstückig fortsetzenden, schalenförmigen Querteil (102) aufweist, daß das Betätigungsglied (11) als Kappe (12) ausgebildet ist, die den Querteil (102) des Gehäuses (10) übergreift und mittels zweier innen von dem Kappenboden (121) rechtwinklig abstehender, einander diametral gegenüberliegender, kreisbogenabschnittförmiger Führungssegmente (13) in dem Mittelteil (101) des Gehäuses (10) axial verschieblich geführt ist, daß die Druckfeder (23) zwischen den Führungssegmenten (13) aufgenommen ist und sich einerseits am Boden (101a) des Mittelteils (101) des Gehäuses (10) und andererseits an der Innenseite des Kappenbodens (121) der Kappe (12) abstützt und daß an dem Kappenrand (122) der Kappe (12) radial nach innen vorspringende, den Anschlag bildende, Clipshaken (18) und im Mantel des Querteils (102) des Gehäuses (10) die Clipshaken (18) aufnehmende Axialnuten (19) ausgebildet sind, die nahe dem Schalenrand des Querteils (101) durch jeweils eine den Gegenanschlag bildende Radialschulter (20) begrenzt sind.

6. Kick-down-Element nach Anspruch 5, **dadurch gekennzeichnet, daß** Gehäuse (10) und Kappe (12) als Rotationskörper ausgebildet sind und an der Kappe (12) zwei Clipshaken (19) und an dem Querteil (102) des Gehäuses (10) zwei Axialnuten (19) vorgesehen sind, die sich jeweils einander diametral gegenüberliegen.

7. Kick-down-Element nach Anspruch 5 oder 6, **dadurch gekennzeichnet, daß** am Gehäuse (10) die von der ringförmigen Stirnfläche des Querteils (102) des Gehäuses (10) bis zu den die Begrenzungskanten der Axialnuten festlegenden Radialschultern (20) reichende Außenfläche des Querteils (102) abgerundet ist und die Clipshaken (18) eine über die Abrundung hinweggleitende Auflaufschräge (181) aufweisen.

8. Kick-down-Element nach einem der Ansprüche 5 - 7, **dadurch gekennzeichnet, daß** im Boden (101a) des Mittelteils (101) des Gehäuses (10) eine Vertiefung (21) eingearbeitet ist, in der der Quersteg (221) der Blattfeder (22) einliegt, und daß die am Boden (101a) des Mittelteils (101) sich abstützende Druckfeder (23) die Blattfeder (22) in der Vertiefung (21) fixiert.

9. Kick-down-Element nach einem der Ansprüche 5 - 8, **dadurch gekennzeichnet, daß** die Lagerschalen (16) von zwei innen vom Kappenboden (121) der Kappe (12) rechtwinklig abstehenden, einander diametral gegenüberliegenden Stegen (14) gebildet sind, in denen Nuten (15) mit Kreisabschnittsprofil eingearbeitet sind, die mit ihren Nutöffnungen einander zugekehrt sind, daß die Wälzkörper (17) als in den Nuten (15) einliegende Walzen ausgebildet sind und daß die Schenkelenden (222a) der Federschenkel (222) der Blattfeder (22) sich unmittelbar unter den von dem Kappenboden (121) der Kappe (12) abgekehrten, unteren Nutöffnungskanten (151) an den Stegen (14) mit Vorspannung andrücken.

10. Kick-down-Element nach Anspruch 9, **dadurch gekennzeichnet, daß** die Stege (14) von ihrer Nutöffnungskante (151) bis zu ihrem freien Ende so abgeschrägt sind, daß sie eine Auflauframpe (141) für die Schenkelenden (222a) der Federschenkel (222) der Blattfeder (22) beim Aufsetzen der Kappe (12) auf das Gehäuse (10) bilden.

## Claims

1. Kickdown element for an accelerator pedal module of a vehicle, having a housing (10) and having an activation element (1) which is guided in the housing is axially displaceable counter to the force of a restoring spring (23) and is fitted with two diametrically arranged roller bodies (17) which, when the activation element (11) is inserted into the housing (10) in order to increase the displacement force, are forced away over in each case one pushover edge counter to the force of a leaf spring (22) which is bent into a U shape, **characterized in that** the roller bodies (17) are held in diametrically opposite bearing shells (16), **in that** the leaf spring (22) which has two elongated spring limbs (222) and a transverse web (221) which connects said limbs is secured by its transverse web (221) to the base (101a) of the housing (10) and bears with its spring limbs (222) with prestressing against the bearing shells (16) in such a way that when the activation element (11) is inserted the roller bodies (17) are pushed onto the outer sides, facing away from one another, of the spring limbs (222), and **in that** the pushover edges are formed on the end-side limb ends (222a) of the spring limbs (222).

2. Kickdown element according to Claim 1, **characterized in that**, when the leaf spring (22) is unstressed, the spring limbs (222) which are opposite one another protrude in one piece from the transverse web (221) at an obtuse angle, and **in that** the pushover edges are each embodied as a ramp (25) which drops away at the free end faces of the spring limb (222) toward their outer edge.

3. Kickdown element according to Claim 1 or 2, **characterized in that** the leaf spring (12) is secured in the housing (10) by means of the restoring spring which is embodied as a compression spring (22) and which is supported between the transverse web (221), bearing against the bottom (101a) of the housing (10), of the leaf spring (22), and the activation element (11).

4. Kickdown element according to Claim 3, **characterized in that** the activation element (11) bears with a stop (18), under the prestress force of the compression spring (23), against a counter stop (20) which is formed on the housing (10).

5. Kickdown element according to Claim 4, **characterized in that** the housing (10) has a T-shaped transverse-sectional profile with a beaker-shaped centre part (101) and a shell-shaped transverse part (102) which continues in one piece at the edge of the beaker, **in that** the activation element (11) is embodied as a cap (12) which engages over the transverse part (102) of the housing (10) and is guided in an axially displaceable fashion in the centre part (101) of the housing (10) by means of two guide segments (13) which protrude at right angles from the inside of the cap bottom (121), lie diametrically opposite one another and are in the shape of a circular arc segment, **in that** the compression spring (23) is held between the guide segments (13) and is supported, on the one hand, on the bottom (101a) of the centre part (101) of the housing (10) and, on the other hand, on the inside of the cap bottom (121) of the cap (12), and **in that** radially inwardly projecting clip hooks (18) which form the stop are formed on the cap edge (122) of the cap (12), and axial grooves (19) which receive the clip hooks (18) are formed in the lateral surface of the transverse part (102) of the housing (10) and are bounded near to the shell edge of the transverse part (102) by, in each case, a radial shoulder (20) which forms the counter stop.

6. Kickdown element according to Claim 5, **characterized in that** the housing (10) and the cap (12) are embodied as rotary bodies and two clip hooks (18) are provided on the cap (12) and two axial grooves (19) are provided on the transverse part (102) of the housing (10) which lie respectively diametrically opposite one another.

7. Kickdown element according to Claim 5 or 6, **characterized in that**, on the housing (10), the outer face of the transverse part (102) which extends from the annular end face of the transverse part (102) of the housing (10) as far as the radial shoulders (20) which secure the boundary edges of the axial grooves is rounded and the clip hooks (18) have a run-up slope (181) which slides away over the rounded portion.

8. Kickdown element according to one of Claims 5 to 7, **characterized in that** a depression (21) in which the transverse web (221) of the leaf spring (22) rests is formed in the bottom (101a) of the centre part (101) of the housing (10), and **in that** the compression spring (23) which is supported on the bottom (101a) of the centre part (101) secures the leaf spring (22) in the depression (21).

9. Kickdown element according to one of Claims 5 to 8, **characterized in that** the bearing shells (16) are formed by two webs (14) which protrude at right angles from the inside of the cap bottom (121) of the cap (12), lie diametrically opposite one another and have grooves (15) with a circular section profile formed in them, said grooves facing one another with their groove openings, **in that** the roller bodies (17) are embodied as rollers which rest in the grooves (15), and **in that** the limb ends (222a) of the spring lens (222) of the leaf spring (22) press with prestress against the webs (14) directly under the lower groove opening edges (151) which face away from the cap bottom (121) of the cap (12).

10. Kickdown element according to Claim 9, **characterized in that** the webs (14) are bevelled from their groove opening edge (151) as far as their free end in such a way that they form a run-up ramp (141) for the limb ends (222a) of the spring limbs (222) of the leaf spring (22) when the cap (12) is fitted onto the housing (10).

## Revendications

1. Kickdown pour pédale d'accélérateur d'un véhicule automobile doté d'un boîtier (10) et d'un organe d'actionnement (11) guidé dans le boîtier (10), mobile axialement contre la force d'un ressort de rappel (23) et portant deux corps de roulement (17) disposés diamétralement et comprimés dans la direction opposée par respectivement une arête de compression lors de l'introduction de l'organe d'actionnement (11) dans le boîtier (10) dans le but d'augmenter la force de déplacement à l'encontre de la force d'un ressort à lames (22) courbé en forme de U,
**caractérisé en ce que**
les corps de roulement (17) sont logés dans des coquilles de coussinet (16) diamétralement opposées les unes aux autres, le ressort à lames (22) présentant les deux branches de ressort (222) allongées et une barrette transversale (221) les reliant est fixé avec sa barrette transversale (221) sur le fond (101a) du boîtier (10) et est ainsi disposé avec ses branches de ressort (222) sous précontrainte sur les coquilles de coussinet (16) de telle sorte que lors de l'introduction de l'organe d'actionnement (11), les corps de roulement (17) se poussent sur les côtés extérieurs opposés les uns aux autres des branches de ressort (222), et les arêtes de compression sont formées sur les extrémités (222a) des branches de ressort (222) côté avant.

2. Kickdown selon la revendication 1,
**caractérisé en ce qu'**
en cas de ressort à lame (22) détendu, les branches de ressort (222) opposées les unes aux autres sont écartées d'un seul tenant de la barrette transversale (221) selon un angle tronqué, et les arêtes de compression sont respectivement formées en tant que rampe (25) descendant sur les faces avant libres des branches de ressort (222) en direction de leurs arêtes extérieures.

3. Kickdown selon la revendication 1 ou 2,
**caractérisé en ce que**
le ressort à lame (12) est fixé dans le boîtier (10) à l'aide du ressort de rappel conçu en tant que ressort de pression (23) qui s'appuie entre la barrette transversale (221) du ressort à lame (22) posée contre le fond (101a) du boîtier (10) et l'organe d'actionnement (11).

4. Kickdown selon la revendication 3,
**caractérisé en ce que**
l'organe d'actionnement (11) avec une butée (18) se trouve au niveau d'une contre-butée (20) formée sur le boîtier (10) sous la force de précontrainte du ressort de pression (23).

5. Kickdown selon la revendication 4,
**caractérisé en ce que**
le boîtier (10) présente un profil transversal en forme de T avec une pièce centrale (101) en forme de pot et une pièce transversale (102) en forme de coquille se prolongeant d'un seul tenant sur le bord du pot, l'organe d'actionnement (11) est conçu en tant que calotte (12) dépassant la pièce transversale (102) du boîtier (10) et étant guidée de manière mobile axialement dans la pièce centrale (101) du boîtier (10) au moyen de deux segments de guidage (13) en forme de section en arc de cercle diamétralement opposés l'un de l'autre et écartés intérieurement à angle droit par rapport au fond de la calotte, le ressort de pression (23) est logé entre les segments de guidage (13) et s'appuie d'une part sur le fond (101a) de la pièce centrale (101) du boîtier (10) et d'autre part sur la face intérieure du fond (121) de la calotte (12), des crochets de type clips (18) formant la butée et faisant saillie radialement vers l'intérieur sont prévus sur le bord (122) de la calotte (12), et des rainures axiales (19) logeant les crochets de type clips (18) et étant limitées près du bord de la coquille de la pièce transversale (101) par respectivement un épaulement radial formant la contre-butée (20) sont conçues dans la jupe de la pièce transversale (102) du boîtier (10).

6. Kickdown selon la revendication 5,
**caractérisé en ce que**
le boîtier (10) et la calotte (12) sont conçus en tant que corps de rotation, et deux crochets de type clips (19) sont prévus sur la calotte (12) de même que deux rainures axiales (19) diamétralement opposées l'une à l'autre sur la pièce transversale (102) du boîtier (10).

7. Kickdown selon la revendication 5 ou 6,
**caractérisé en ce que**
la surface extérieure de la pièce transversale (102) s'étendant depuis la face frontale annulaire de la pièce transversale (102) du boîtier (10) aux épaulements radiaux (20) fixant les arêtes de délimitation des rainures axiales est arrondie, et les crochets en forme de clips (18) présentent un biseau incliné (18) conduisant loin de l'arrondi.

8. Kickdown selon l'une quelconque des revendications 5 à 7,
**caractérisé en ce qu'**
un creux (21) dans lequel se trouve la barrette transversale (221) du ressort à lame (22) est réalisé dans le fond (101a) de la pièce centrale (101) du boîtier (10), et le ressort de pression (23) s'appuyant sur le fond (101a) de la pièce centrale (101) fixe le ressort à lame (22) dans le creux (21).

9. Kickdown selon l'une quelconque des revendications 5 à 8,
**caractérisé en ce que**
les coquilles de coussinet (16) sont formées par deux barrettes (14) diamétralement opposées l'une à l'autre et éloignées à angle droit du fond (121) de la calotte (12), auquel cas des rainures (15) tournées les unes vers les autres avec leurs ouvertures sont réalisées dans ces barrettes avec un profil de segment circulaire, les corps de roulement (17) sont conçus en tant que cylindres placés dans les rainures (15), et les extrémités (222a) des branches (222) des ressorts à lame (22) se serrent contre les barrettes (14) avec une précontrainte directement sous les arêtes inférieures d'ouverture de rainure (151) opposées au fond (121) de calotte (12).

10. Kickdown selon la revendication 9,
**caractérisé en ce que**
les barrettes (14) sont chanfreinées depuis leur arête d'ouverture de rainure (151) jusqu'à leur extrémité libre de manière à former une rampe inclinée (141) pour les extrémités (222a) des branches (222) des ressorts à lame (22) lors de la pose de la calotte (12) sur le boîtier (10).
